# EUROPEAN PATENT APPLICATION

(11) **EP 3 024 131 A1**
(43) Date of publication of application: **25.05.2016**
(21) Application number: 14723093.2
(22) Date of filing: 27.03.2014
(51) Int. Cl.: H02M 3/335

(54) **24-240 VOLT INPUT VOLTAGE FLYBACK SWITCH MODE POWER SUPPLY**

(71) Applicant: Chaves García, Jordi, 08450 Llinars del Vallès (Barcelona) (ES); Chaves García, Juan Miguel, 08450 Llinars del Vallès (Barcelona) (ES)
(72) Inventor: CHAVES GARCÍA, Jordi, E-08450 Llinars del Vallès (Barcelona) (ES)
(74) Representative: Capitán García, Maria Nuria
(86) International application number: PCT/ES2014/070232
(87) International publication number: WO 2015/144943

(57) **Abstract**

24/240 Volt flyback type switch mode power supply comprising a rectifier (5), a transformer (2), loading and unloading condensers (6), a voltage regulator (1), where the low voltage protection has been removed from the voltage regulator (1) in order to be able to work below 90 Volts and up to 240 Volts; a voltage stabilizer (3) which provides a reference voltage fed back to the voltage regulator (1) so that the output voltage has a stable output for the full voltage range; a transformer that will have wires with insulation capable to work at 240 Volts and a section capable of allowing the passage of a high current for power at a voltage of 24 Volts and the output capacitors (6) are low ESR.

## Description

### PURPOSE OF THE INVENTION

The object of the present invention is, as the title of the invention provides, a 24-240 Volt switch mode power supply, preferably a flyback type Power Supply.

The present invention is characterised by the fact that is able to work with a very wide range of voltages ranging from 24 volts to 240 volts, the latter voltage is 10 times higher than the minimum voltage allowed. To achieve this, functional and structural changes have been performed in the elements used in switch mode power supplies currently used.

Therefore, the present invention lies in the field of fly-back type switch mode power supplies.

### BACKGROUND OF THE INVENTION

Existing power supplies in the market have an operating range from 12 Volts to 24-48 Volts for DC Power Supplies and from 85 Volts to 240 Volts for AC Power Supplies.

Generally, known power supplies are designed so that the output voltage is at most three times than the lower output voltage due to the stability problems and design of its components.

However, so far power supplies covering the entire operating range of elements in the industry have not been created, from 24 Volts to 240 Volts, due to the technical constraints of the elements used for the manufacture of voltage sources and the consequences of reaching a voltage range as low as 24 volts, besides being able to get up to 240 Volts.

It is therefore an object of the present invention to develop a switch mode power supply that covers a range of voltage supply from 24 Volts to 240 Volts.

### DESCRIPTION OF THE INVENTION

The object of the present invention is a 24-240 Volt switch mode power supply whose components have undergone some modifications so it can work in a wide range of voltages.

First, a voltage regulator was used, overriding the low voltage protection, since voltage regulators in the market usually work between 90 to 265 volts, with a low voltage protection, since they are not able to regulate the output voltage in a stable manner for a voltage lower than 90 volts.

Following the cancellation of the low voltage protection of the voltage regulator, the power supply has been provided with higher accuracy voltage stabilizer, which ultimately provides a voltage reference fed back to the voltage regulator to stabilize the output voltage.

Another consequence resulting from the expansion of the range of voltages, particularly the increase of the low voltages reaching 24 Volts, is that at this voltage the wires of the transformer must be designed for the maximum current that could be 1 amp, i.e., it must have a large enough section to withstand the currents at low voltage.

Moreover, as a consequence of being able to work at voltages of 24 Volts, it is necessary that the winding of the transformer has an electric insulation higher than the maximum output voltage.

On the other hand, the output capacitors are low ESR (equivalent series resistance) capacitors which are low series inductance capacitors, with the aim of improving the filtering on the output and no noise due to the working switching frequency, since the switching frequency has to be high compared to what was being done in existing switch mode power supplies, because they are intended to work at a lower voltage range.

To complement this, the switch mode power supply may have a means of detecting from which one the signal is really active in all voltage ranges, to indicate to the control circuit which signal used to open and close.

### EXPLANATION OF FIGURES

In order to supplement the description being made and with the aim of aiding in a better understanding of the features of the invention, in accordance with a preferred practical embodiment example thereof, a drawing, in which the following has been represented in an illustrative and not limiting manner, accompany said description as an integral part:

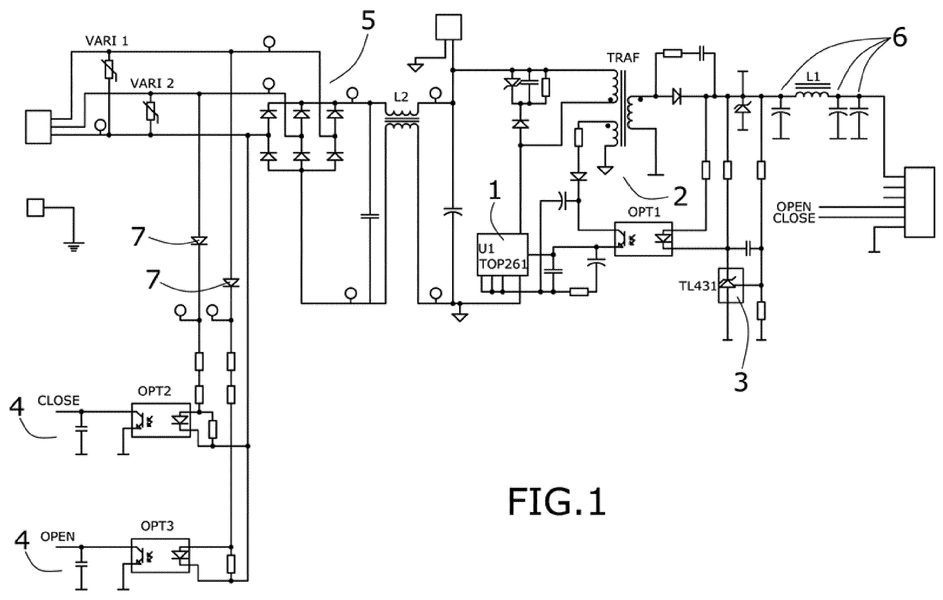

In Figure 1, we see a representation of the electronic diagram of the power supply subject of the invention.

### PREFERRED REALISATION OF THE INVENTION

In view of the figure, a preferred method for realising the proposed invention is described below.

In Figure 1 we can see the elements of a flyback switch mode power supply, such as a rectifier (5), a transformer (2) loading and unloading capacitors (6), a voltage regulator (1).

It should be noted that these elements have undergone constructive and functional modifications to be able to work in the entire range of voltages from 24 Volts to 240 Volts, besides having to add additional elements.

First, the low voltage protection has been removed from the voltage regulator (1) so that it can work at low voltages, it has therefore been necessary to add a more accurate surge protector (3) than those used so far. Such stabilizer (3) provides a reference voltage fed back to the voltage regulator (1) so that the output voltage has stability in the entire output voltage range.

In one possible embodiment, the voltage regulator (1) is an integrated TOP 261, while the voltage stabilizer (3) is an integrated TL431.

The transformer will have wire with insulation capable to work at 240 Volts and a section capable of allowing the passage of maximum current for power at a voltage of 24 Volts.

The output capacitors (6) are low ESR capacitors, i.e. low ESR in order to improve filtering at the output and no noise. They are capacitors known in the trade as low ESR capacitors, not being therefore an ambiguous or relative expression.

Complementarily and in order to detect which is the active signal of the power connector, at the input of the switch mode power supply, that can be integrated on the same plate or not, power supply signal detection means have been arranged consistent in some optocouplers (4).

The optocouplers (4) are connected via diodes (7) with the input signals in order to reduce their power consumption.

## Claims

1. 24/240 Volt flyback type switch mode power supply comprising, a rectifier (5), a transformer (2), condensers (6) for loading and unloading, a voltage regulator (1), **characterized in that**:
- Low voltage protection has been removed from the voltage regulator (1).
- It comprises a voltage stabilizer (3) which provides a reference voltage fed back to the voltage regulator (1) so that the output voltage has stability in the entire output voltage range.
- The transformer will have wire with insulation capable to work at 240 Volts and a section capable of allowing the passage of maximum current for power at a voltage of 24 Volts.
- The output capacitors (6) are low ESR capacitors.

2. 24-240 Volt flyback type switch mode power supply, according to claim 1 wherein the voltage regulator (1) is an integrated TOP 261, while the voltage stabilizer (3) is an integrated TL431.

3. 24-240 Volt flyback type switch mode power supply, according to any preceding claim, wherein at the input of the switch mode power supply means have been arranged for signal detection that consist in power optocouplers (4).

## Amended claims

### Amended claims under Art. 19.1 PCT

1. 24/240 Volt flyback type switch mode power supply comprising, a rectifier (5), a transformer (2), condensers (6) for loading and unloading, a voltage regulator (1), wherein
- it comprises a voltage stabilizer (3) which provides a reference voltage fed back to the voltage regulator (1) so that the output voltage has stability in the entire output voltage range,
- the output capacitors (6) are low ESR capacitors,
**characterized in that**
- low voltage protection has been removed from the voltage regulator (1) and it is an integrated TOP 261,
- the transformer will have wire with insulation capable to work at 240 Volts and a section capable of allowing the passage of maximum current for power at a voltage of 24 Volts.

2. 24-240 Volt flyback type switch mode power supply, according to claim 1, wherein at the input of the switch mode power supply means have been arranged for signal detection that indicates which one the signal is really active in all voltage ranges, to indicate to the control circuit which signal used to open and close, wherein such signal detectors consist in power optocouplers.
